# EUROPEAN PATENT APPLICATION

(11) **EP 3 076 392 A1**
(43) Date of publication of application: **05.10.2016**
(21) Application number: 16160297.4
(22) Date of filing: 15.03.2016
(51) Int. Cl.: G11B 27/00, G11B 27/10, H04N 5/783

(54) **METHOD AND DEVICE FOR CONTROLLING PLAYING AND ELECTRONIC EQUIPMENT**

(30) Priority: 31.03.2015 CN 201510149205
(71) Applicant: Xiaomi Inc., Beijing 100085 (CN)
(72) Inventor: TANG, Mingyong, 100085 BEIJING (CN); LIU, Huayijun, 100085 BEIJING (CN); CHEN, Tao, 100085 BEIJING (CN)
(74) Representative: Cougard, Jean-Marie

(57) **Abstract**

The present disclosure relates to a method for controlling playing, a device for controlling playing, and an electronic equipment. The method comprises: obtaining (102) a video file; determining (104) a vision field of a user; selecting (106) a video clip corresponding to the vision field of the user from the video file, and playing (106) the video clip.

## Description

### FIELD

The present disclosure relates to the field of wearable technology, and more particularly, to a method for controlling playing, a device for controlling playing, and an electronic equipment.

### BACKGROUND

With the development of science and technology, more and more wearable devices appear, such as smart bracelets, smart glasses and the like. Hence, it is a problem to be tackled on how to utilize hardware features of the wearable devices to facilitate people's daily life.

### SUMMARY

Embodiments of the present invention provide a method for controlling playing, a device for controlling playing, and an electronic equipment, so as to solve the defects in the related art.

According to a first aspect of embodiments of the present invention, there is provided a method for controlling playing. In a particular embodiment, this method is applied in a device. The method comprises: obtaining a video file; determining a vision field of a user; and selecting a video clip corresponding to the vision field of the user from the video file, and playing the video clip.

According to a particular embodiment, the step of obtaining the video file comprises: invoking a camera of a device to shoot a subject; or receiving the video file obtained by shooting the subject by a camera of another device.

According to a particular embodiment, the step of determining a vision field of a user comprises: determining the vision field of the user according to head orientation and eyeball motion state of the user captured.

According to a particular embodiment, the step of playing the video clip comprises: obtaining a motion feature parameter of the subject shot; determining whether a motion intensity of the subject shot belongs to a preset intensity range, according to the motion feature parameter; if no, playing the video clip at a variable speed, otherwise playing the video clip at an invariable speed distinct form the variable speed.

According to a particular embodiment, the motion feature parameter comprises at least one of motion speed and motion frequency, in which if the motion feature parameter comprises the motion speed, and the motion speed falls into a preset speed range, the motion intensity of the subject shot belongs to the preset intensity range; if the motion feature parameter comprises the motion frequency, and the motion frequency falls into a preset frequency range, the motion intensity of the subject shot belongs to the preset intensity range.

According to a particular embodiment, a boundary value of the preset speed range is in positive correlation to a shooting distance of the subject shot.

According to a particular embodiment, the step of playing the video clip at the variable speed comprises: playing the video file at an accelerated (or first) speed if a value of the motion feature parameter is smaller than a lower boundary value of the preset intensity range; playing the video file at a decelerated (or second) speed if the value of the motion feature parameter is greater than an upper boundary value of the preset intensity range, wherein the accelerated (or first) speed is faster than the decelerated (second) speed.

According to a particular embodiment, the step of playing the video clip comprises: identifying a shooting scene of the video file according to a type of the subject shot or a type of an action executed by the subject shot; determining whether the shooting scene belongs to a preset variable speed replay scene; if yes, playing the video clip at a variable speed, otherwise playing the video clip at an invariable speed distinct form the variable speed.

According to a particular embodiment, the step of playing the video clip comprises: displaying a motion track formed in a video footage of the video clip of the subject shot.

A computer program is provided according to a particular aspect of the invention. The computer program performs the steps of the method defined above when this program is executed by a computer.

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

The information medium can also be an integrated circuit in which the program is incorporated, the circuit being adapted to execute the method in question or to be used in its execution.

According to a second aspect of embodiments of the present invention, there is provided a device for controlling playing. The device comprises: an obtaining unit configured to obtain a video file; a determining unit configured to determine a vision field of a user; a playing unit configured to select a video clip corresponding to the vision field of the user from the video file, and to play the video clip.

According to a particular embodiment, the obtaining unit comprises an invoking sub-unit or a receiving sub-unit, in which the invoking sub-unit configured to invoke a camera of the device to shoot a subject; and the receiving sub-unit configured to receive the video file obtained by shooting the subject by a camera of another device.

According to a particular embodiment, the determining unit comprises: a state capturing sub-unit configured to capture head orientation and eyeball motion state of the user; and a field determining sub-unit configured to determine the vision field of the user according to the head orientation and the eyeball motion state of the user.

According to a particular embodiment, the playing unit comprises: a parameter obtaining sub-unit configured to obtain a motion feature parameter of the subject shot; an intensity determining sub-unit configured to determine whether a motion intensity of the subject shot belongs to a preset intensity range, according to the motion feature parameter; a first playing sub-unit configured to play the video clip at a variable speed if the motion intensity does not belong to the preset intensity range, otherwise to play the video clip at an invariable speed distinct form the variable speed.

According to a particular embodiment, the motion feature parameter comprises at least one of motion speed and motion frequency, in which if the motion feature parameter comprises the motion speed, and the motion speed falls into a preset speed range, the motion intensity of the subject shot belongs to the preset intensity range; if the motion feature parameter comprises the motion frequency, and the motion frequency falls into a preset frequency range, the motion intensity of the subject shot belongs to the preset intensity range.

According to a particular embodiment, a boundary value of the preset speed range is in positive correlation to a shooting distance of the subject shot.

According to a particular embodiment, the first playing sub-unit comprises: a fast playing module configured to play the video file at an accelerated (or first) speed, if a value of the motion feature parameter is smaller than a lower boundary value of the preset intensity range; and a slow playing module configured to play the video file at a decelerated (or second) speed, if the value of the motion feature parameter is greater than an upper boundary value of the preset intensity range, wherein the accelerated (or first) speed is faster that the decelerated (or second) speed.

According to a particular embodiment, the playing unit comprises: a scene identifying sub-unit configured to identify a shooting scene of the video file according to a type of the subject shot or a type of an action executed by the subject shot; a scene determining sub-unit configured to determine whether the shooting scene belongs to a preset variable speed replay scene; and a second playing sub-unit configured to play the video clip at a variable speed if the shooting scene belongs to the preset variable speed replay scene, otherwise to play the video clip at a invariable speed distinct form the variable speed.

According to a particular embodiment, the playing unit comprises: a track displaying sub-unit configured to display a motion track formed in a video footage of the video clip of the subject shot.

According to a third aspect of embodiments of the present invention, there is provided an electronic equipment. The electronic equipment comprises: a processor; and a memory configured to store an instruction executable by the processor. The processor is configured to obtain a video file, to determine a vision field of a user, to select a video clip corresponding to the vision field of the user from the video file, and to play the video clip.

According to the embodiments of the present invention, the technical solution has the following effects.

The vision field of the user is determined, such that the video content played can vary as the vision field is controlled by turning the head, so as to facilitate careful observation of each motion stage of the subject shot, and to bring about immersive viewing experience.

It is to be understood that both the foregoing general description and the following detailed description are illustrative and explanatory only and are not restrictive of the invention.

In a particular embodiment, the invention provides an electronic equipment, comprising:
a processor;
a memory configured to store an instruction executable by the processor;
wherein the processor is configured to:
   obtain a video file;
   determine a vision field of a user;
   select a video clip corresponding to the vision field of the user from the video file, and play the video clip.

### BRIEF DESCRIPTION OF THE DRAWINGS

The accompanying drawings, which are incorporated in and constitute a part of this specification, illustrate exemplary embodiments of the present invention and, together with the description, serve to explain the principles of the present invention.
Fig. 1 is a flow chart of a method for controlling playing according to an illustrative embodiment.
Fig. 2 is a schematic diagram of a video shooting scene according to an illustrative embodiment.
Fig. 3 is a schematic diagram of another video shooting scene according to an illustrative embodiment.
Fig. 4 is a schematic diagram of determining a vision field of a user according to an illustrative embodiment.
Figs. 5-8 show schematic diagrams of a video footage according to an illustrative embodiment.
Figs. 9-13 show schematic diagrams of playing at a variable speed according to an illustrative embodiment.
Figs. 14-20 are block diagrams of a device for controlling playing according to an illustrative embodiment.
Fig. 21 is a schematic diagram of a device for controlling playing according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

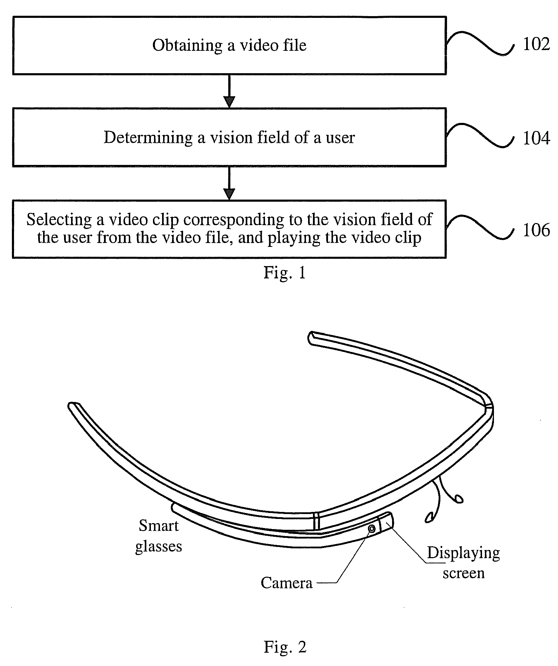

Fig. 1 is a flow chart of a method applied in a device for controlling playing according to an illustrative embodiment. As shown in the particular embodiment of Fig. 1, the method, which may be applied in a wearable device, comprises the following steps.

In step 102, a video file is obtained.

In a particular embodiment, the wearable device may be smart glasses, and can automatically infer whether to play the video file at a variable speed by shooting the subject, along with conditional judgment, so as to optimize the viewing process of the user.

Take the smart glasses as an example. As an illustrative embodiment, the subject may be shot directly by the smart glasses. Referring to Fig. 2, as an illustrative embodiment, the smart glasses are equipped with a camera and a displaying screen, such that the smart glasses can directly invoke its own camera to shoot the subject, and replay at the variable speed on the displaying screen when the subject shot satisfies a condition of variable speed replay.

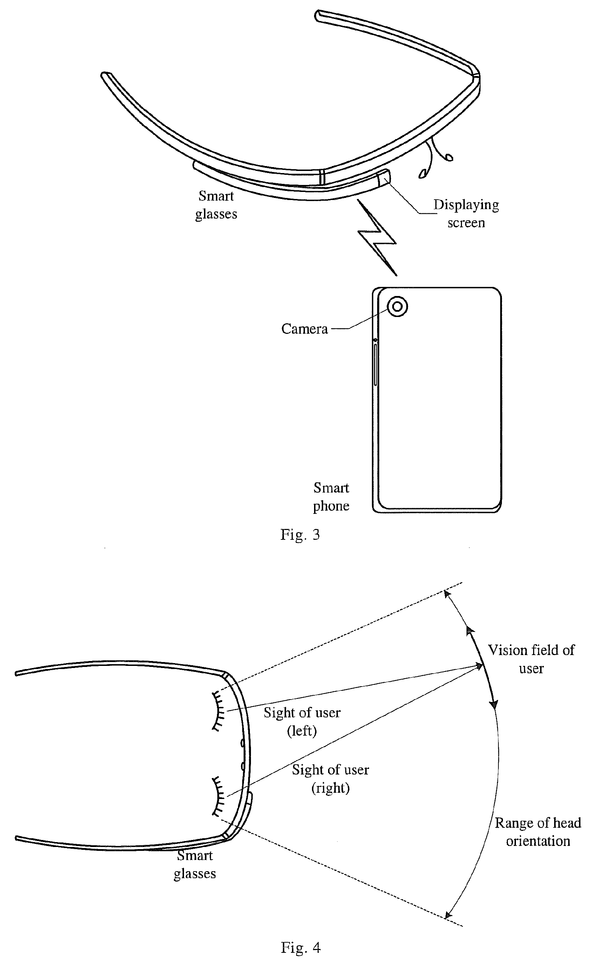

As another illustrative embodiment, the smart glasses may cooperate with another device for shooting. As shown in Fig. 3, as another illustrative embodiment, it is possible that the smart glasses is not provided with any camera, but is only provided with a displaying screen. In such a case, a camera of another device (like a smart phone) may shoot the subject to obtain a video file, and the smart glasses only need to receive the video file. Even if the smart glasses possesses its own camera, another device, like the smart phone, may shoot the video when being equipped with a better camera, and then transmit the video file to the smart glasses to realize the variable speed replay.

The video file may be transmitted from the smart phone to the smart glasses in a wireless manner, such as Bluetooth. Of course, any wireless or wired data transmission mode may be applied to the technical solution of the present invention which does not limit the transmission mode.

The following embodiments each take "smart glasses" for example for the convenience of description, but it shall be understood by those skilled in the art that the technical solution of the present disclosure can be applied to other wearable or non-wearable electronic devices. The invention can for instance be applied in electronic devices which are able to process information and display images (like a displaying screen), and, in particular embodiments, which are capable of identifying the subject shot and determining whether the subject shot satisfies the condition.

In step 104, a vision field of a user is determined.

In this embodiment, the vision field of the user may be determined according to head orientation and eyeball motion state of the user captured. Regarding the particular example of smart glasses, Fig. 4 shows a schematic view illustrating determining a vision field of a user, in which the camera of the smart glasses is able to rotate along with the rotation of the head, so as to form a range of head orientation shown in Fig. 4. That is, the user can see a largest vision field at the current head orientation. Further, by capturing the eyeball motion state of the user, the position of viewing focus of the left and right eye sight may be acquired, and the vision region near the position of the viewing focus is taken as the vision field of the user.

In step 106, a video clip corresponding to the vision field of the user is selected from the video file and played. In a particular embodiment, the video clip is selected among a plurality of video clips of the video file.

In a particular embodiment, the video content played can vary based on the vision field of the user controlled by turning the head, so as to facilitate careful observation of each motion stage of the subject shot, and to bring about immersive viewing experience.

In a particular embodiment, the video clip may be directly played without adjusting the playing speed and the played picture. Of course, the playing process of the video clip may be processed for further optimization, which will be illustrated in combination with the embodiments.

### 1. Variable speed play

When the motion situation of the subject shot in the video clip is not suitable for the user to watch, for example, impossibility of careful observation as a result of too high motion intensity, or long time observation to obtain a wholly coherent viewing experience due to too low motion intensity, the video clip may be played at a variable speed, so as to optimize the viewing experience.

Therefore, the motion intensity of the subject shot may be judged or evaluated in the following ways, so as to determine whether the variable speed play needs to be conducted, and how to perform the variable speed play.

### 1.1 Based on motion feature parameters

### 1) Motion speed

Two conditions - too fast or too slow exist in terms of the motion speed, and here the condition of "too fast" is taken as an example for illustration. Since the "visual persistence of human eyes, referred to as "t", lasts about 0.1 to 0.4 seconds, the motion duration of the subject shot in the vision field of the user may be less than t when the motion speed of the subject shot is too high, such that the user cannot observe or even identify the subject shot.

Therefore, the duration from the subject shot entering the vision field of the user to leaving the vision field should be longer than t, to ensure that the motion intensity of the subject shot belongs to the preset intensity range, such that the user may identify and normally observe the subject.

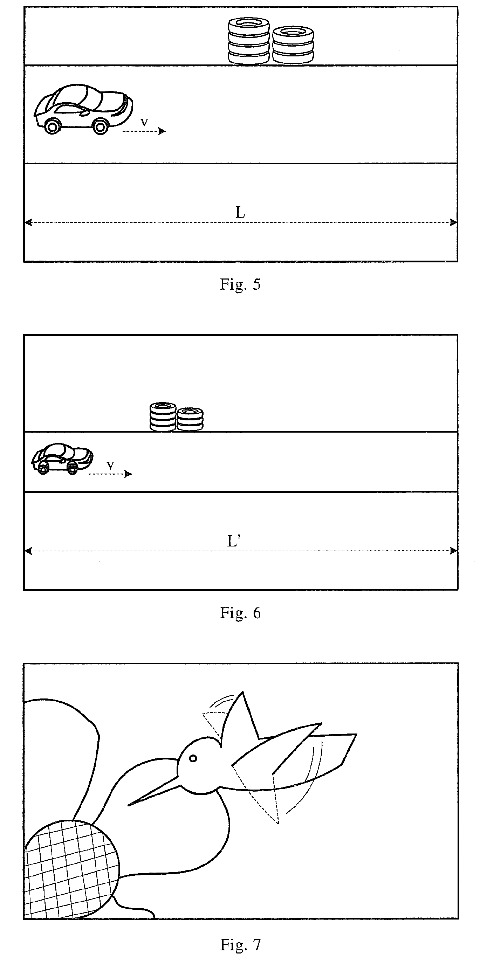

In order to meet the requirement about duration, the actual motion speed of the subject shot and the shooting distance to the subject shot both should be taken into consideration. For instance, Fig. 5 shows a vision field of a user watching a car racing, in which the actual motion speed of the car is v, and the actual length of the motion track in the vision field of the user considering the current shooting distance of the car (the distance between the camera and the car) is L, such that the duration for which the car passes the vision field of the user is T=L/v, and only if T>t is guaranteed, the user can clearly watch the motion situation of the car. Correspondingly, in the case of the shooting distance and the vision field of the user shown in Fig. 5, an upper boundary value of "a preset intensity range" (equivalent to "a preset speed range" herein) is L/t. That is, the user may clearly observe the motion situation of the car, as long as the actual motion speed v of the car is less than L/t, otherwise, the video file should be replayed more slowly.

When the shooting distance of the car is increased, accordingly the vision field of the user is as shown in Fig. 6. The actual length of the motion track of the car in the vision field of the user is increased to L', and thus the upper boundary value of "the preset intensity range" is increased to L'/t. That is, the user may clearly observe the motion situation of the car, as long as the actual motion speed v of the car is less than L'/t, otherwise, the video file should be replayed more slowly.

### 2) Motion frequency

Likewise, two conditions - too fast or too slow exist in terms of the motion frequency, and here the condition of "too fast" is taken as an example for illustration. Since the "visual persistence" t of human eyes lasts about 0.1 to 0.4 seconds, the user cannot observe or even identify the subject shot, if the motion frequency of the subject shot in the vision field of the user is greater than F=25 times per second.

For instance, Fig. 7 shows a vision field of a user observing a hummingbird flying. In the whole observation process, the hummingbird may remain in the vision field of the user, but the user still cannot normally observe the flying process of the hummingbird when the frequency of flapping the wings usually exceeds 50 times per second, and even reaches hundreds times per second. Through observation, the frequency of flapping wings of "the hummingbird" shot is f. When f is greater than F, it is determined that the motion intensity goes beyond the preset intensity range (equivalent to "a preset frequency range" herein, and F being the upper boundary value of the preset frequency range), and the video file needs to be replayed slowly (at a decelerated speed) to optimize the user's viewing experience.

It shall be noted that the condition of "too fast" is taken as example for illustration of the motion speed and the motion frequency; similarly, "the preset intensity range" may have a lower boundary value - when the motion speed or motion frequency is smaller than the lower boundary value, it is determined that the motion intensity is too low and the video file needs to be replayed fast (at an accelerated speed) to optimize the viewing experience. The lower boundary value is in positive correlation to the shooting distance when it is set in terms of the motion speed.

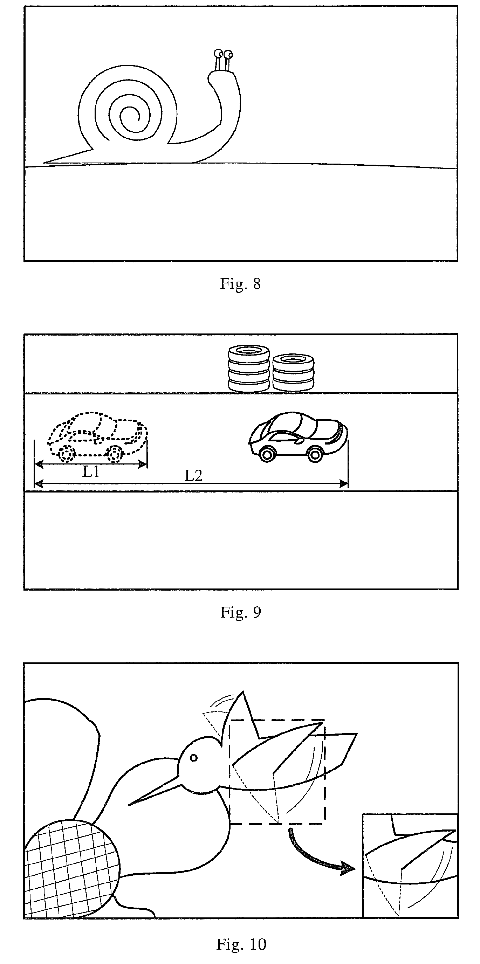

For instance, Fig. 8 shows a vision field of a user observing a snail crawling. It may take tens of minutes for the snail to pass the vision field of the user, which is not good for overall viewing and evaluation of the whole motion process. Consequently, the crawling process of the snail may be replayed faster (at an accelerated speed), such that the user finishes watching the whole crawling process in a short time for better observation of the motion track and motion situation of the snail.

### 1.2 Based on shooting scenes

The smart glasses may identify a shooting scene of the video file according to a type of the subject shot or a type of an action executed by the subject shot, and determine whether the subject shot in the video file satisfies the predefined condition of variable speed replay according to whether the shooting scene belongs to a preset variable speed replay scene.

In this embodiment, a scene which needs to be replayed at a variable speed is defined in advance, i.e. "the preset variable speed replay scene", and the identification feature of each preset variable speed replay scene is set, such as a type of the subject shot or a type of an action executed by the subject shot. Hence, the shooting scene of the video file may be determined accordingly.

As for the shooting scene of the car racing in Fig. 5, the shooting scene which needs to be replayed slowly may be determined in advance, and a feature of "a racing car" and a "driving" action of the car are configured as identification features of the current shooting scene. It may be determined that the current shooting scene needs to be replayed at the variable speed and more specifically replayed slowly (at a decelerated speed), once the smart glasses identify that the current subject shot is a racing car and the car is in a driving status.

Similarly, as for the shooting scene of snail crawling in Fig. 8, the shooting scene which needs to be replayed fast may be determined in advance, and a feature of a snail is taken as the identification feature of the current shooting scene. It may be determined that the current shooting scene needs to be replayed at the variable speed and more specifically replayed fast (at an accelerated speed), as long as the smart glasses identifies that the current subject shot is a snail.

### 2. Variable speed replay

There are various forms to replay a video file at a variable speed. Several possible forms are illustrated in the following, but the present disclosure is not limited thereby.

### 2.1 Overlapping replay

In a particular embodiment, from a video footage of the video file, play data corresponding to the subject shot or part of components of the subject shot that satisfies the predefined condition of variable speed replay is extracted; and then the play data extracted is played in an overlapping manner when the video file is replayed.

As shown in Fig. 9, the subject shot is a vehicle, and the vehicle in dotted lines at the left side of Fig. 9 represents a picture element extracted from the video footage. The picture elements extracted from all the video footages constitute the play data extracted. The vehicle in solid lines at the right side of Fig. 9 represents an original picture element in the video file. Hence, in the process of variable speed replay, the left vehicle in dotted lines (i.e. the picture element extracted) is superposed onto and displayed with the video footage containing the right vehicle in solid lines, so as to acquire the displaying image finally shown in Fig. 9, which can be played on the displaying screen of the smart glasses in Fig. 2 or Fig. 3.

It may be known from Fig. 9 that due to slow replay, the driving distance of the right vehicle in solid lines is L2 while the driving distance of the left vehicle in dotted lines is only L1, such that the user may observe the driving process of the vehicle carefully.

It should be noted that as the description of play data corresponding to part of components of the subject shot that satisfies the predefined condition of variable speed replay, since not every subject shot is the same as the vehicle in Fig. 9 which generates intensive motion on the whole, it is possible to determine whether each component of the subject shot satisfies the predefined condition of variable speed replay, and to replay, at the variable speed, the component that satisfies the predefined condition of variable speed replay, when it is judged whether the subject shot satisfies the predefined condition of variable speed replay.

As shown in Fig. 10, when the hummingbird suspends in the air, only the motion frequency of wings is greater than the preset frequency range, and thus the wing region of the hummingbird may be extracted for slow replay. Of course, if the picture element extracted is superposed onto and displayed with the original picture element, without any substantial change in the position of the subject shot, the wing motion replayed slowly (at a decelerated speed) may interfere with the original wing motion, which will affect the observation of the user. In order to solve the problem, the following playing method may be employed.
1) From a video footage of the video file, play data corresponding to the subject shot or part of components of the subject shot that satisfies the predefined condition of variable speed replay is extracted; and then the play data extracted is played in an overlapping manner within a replay region at a preset position when the video file is replayed.
   For example, as shown in Fig. 10, the preset position may be the lower right corner of the vision field of the user, or any other position, and it should be ensured that the preset position will not block the original picture element. Thus, the user may watch the video file played normally and the play data replayed slowly at the preset position simultaneously, so as to realize comparative observation of the both.
2) Play data corresponding to the subject shot or part of components of the subject shot that satisfies the predefined condition of variable speed replay is extracted from a video footage of the video file; an original picture element in the video footage corresponding to the play data extracted is erased from the video footage, so as to obtain a processed video file; the play data extracted is replayed in an overlapping manner when the processed video file is replayed.

In this embodiment, the original picture element may be directly erased from the video file in order to avoid interference between the picture element extracted and the original picture element, which will not degrade the user viewing experience, since the user expects to see the picture element replayed at the variable speed.

### 2.2 Wholly variable speed replay

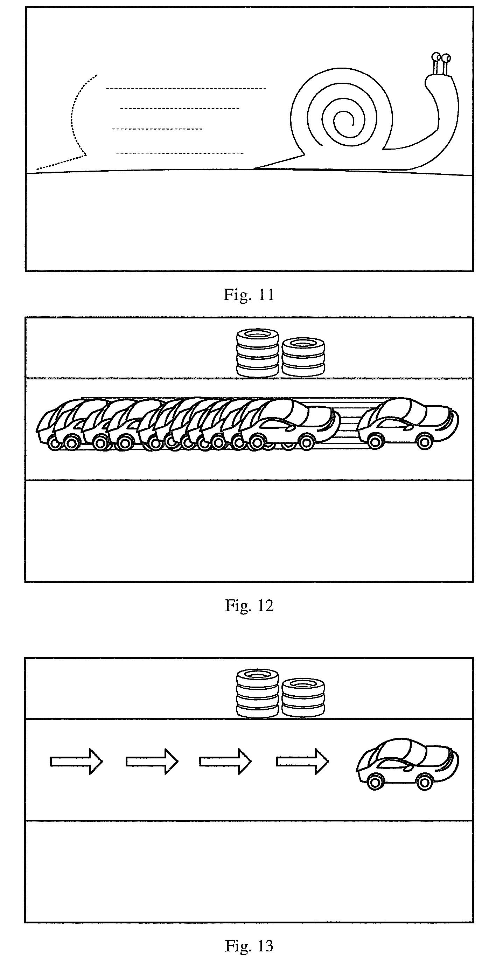

As an illustrative embodiment, a video footage containing the subject shot may be replayed wholly at the variable speed. As shown in Fig. 11, the video file corresponding to the snail crawling may be directly wholly replayed fast (at an accelerated speed), which does not need any complicated processing of the video footage of the video file.

### 3. Displaying motion tracks

During playing the video clip, a corresponding motion track may be generated based on the motion situation of the subject shot, and be displayed in the video footage of the video clip.

As an illustrative embodiment, the motion track may be represented as "an afterimage" of the subject shot. For example, a picture element is extracted from each footage in the video clip of the subject shot, and the picture elements extracted from all the video footages before the current footage in terms of the playing sequence in the video clip are superposed and then displayed.

As shown in Fig. 12, supposing that the playing duration of the video clip corresponding the vision field of the user is "from 03:20 to 05:08", when any time in the period is played, like 04:25, all the "vehicle" elements in the video footages (i.e. the video frames) between "03:20 and 04:25" are extracted, superposed, and displayed in the video footage at 04:25, i.e. obtaining an image displaying effect similar to Fig. 12.

As another illustrative embodiment, the motion track may be represented as a random image identifier, and the corresponding track motion may be indicated by superposing the image identifier onto the motion path of the subject shot for displaying. For example, as shown in Fig. 13, an "arrow" identifier is superposed on the driving path of the vehicle for displaying, and the corresponding motion track may be indicated.

The motion track of the subject shot is displayed in the process of playing the video clip, such that the user can know the motion status of the subject shot overall and can enjoy a better viewing experience.

The present disclosure further provides an embodiment of a device for controlling playing corresponding to the embodiments of the method for controlling playing.

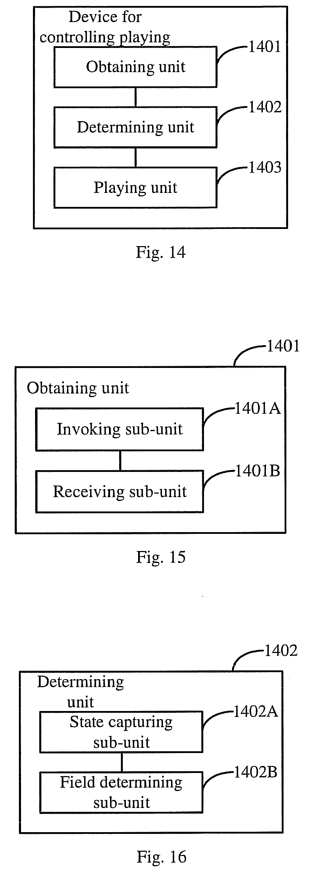

Fig. 14 is a block diagram of a device for controlling playing according to an illustrative embodiment. Referring to Fig. 14, the device comprises: an obtaining unit 1401, a determining unit 1402 and a playing unit 1403, in which the obtaining unit 1401 is configured to obtain a video file; the determining unit 1402 is configured to determine a vision field of a user; the playing unit 1403 is configured to select a video clip corresponding to the vision field of the user from the video file, and play the video clip.

As shown in Fig. 15 that is a block diagram of another device for controlling playing according to an illustrative embodiment, this embodiment is based on the embodiment shown in Fig. 14. The obtaining unit 1401 may comprise: an invoking sub-unit 1401A or a receiving sub-unit 1401B, in which the invoking sub-unit 1401A is configured to invoke a camera of the device to shoot a subject; and the receiving sub-unit 1401B is configured to receive the video file obtained by shooting the subject by a camera of another device.

As shown in Fig. 16 that is a block diagram of another device for controlling playing according to an illustrative embodiment, this embodiment is based on the embodiment shown in Fig. 14. The determining unit 1402 may comprise: a state capturing sub-unit 1402A and a field determining sub-unit 1402B, in which the state capturing sub-unit 1402A is configured to capture head orientation and eyeball motion state of the user; and in which the field determining sub-unit 1402B is configured to determine the vision field of the user according to the head orientation and the eyeball motion state of the user.

It shall be noted that the structures of the state capturing sub-unit 1402A and the field determining sub-unit 1402B shown in the embodiment of Fig. 16 may be contained in the embodiment of Fig. 15, but other embodiments may be contemplated.

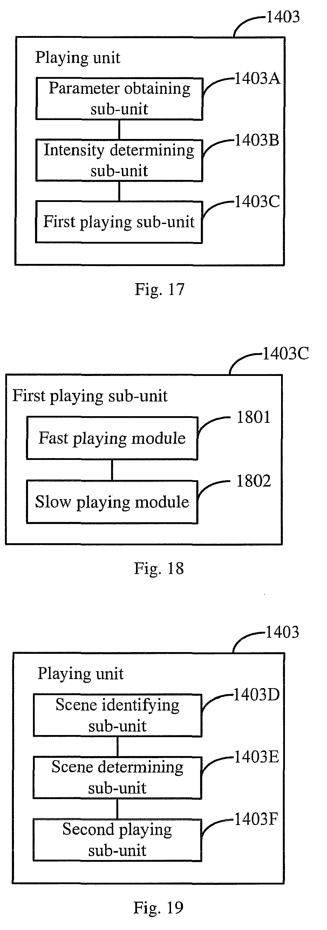

As shown in Fig. 17 that is a block diagram of another device for controlling playing according to an illustrative embodiment, this embodiment is based on the embodiment shown in Fig. 14. The playing unit 1403 may comprise a parameter obtaining sub-unit 1403A, an intensity determining sub-unit 1403B and a first playing sub-unit 1403C, in which the parameter obtaining sub-unit 1403A is configured to obtain a motion feature parameter of the subject shot; the intensity determining sub-unit 1403B is configured to determine whether a motion intensity of the subject shot belongs to a preset intensity range, according to the motion feature parameter; and the first playing sub-unit 1403C is configured to play the video clip at a variable speed if the motion intensity does not belong to the preset intensity range, otherwise to play the video clip at a invariable speed distinct form the variable speed.

In a particular embodiment, the motion feature parameter comprises at least one of motion speed and motion frequency, in which if the motion feature parameter comprises the motion speed, and the motion speed falls into a preset speed range, the motion intensity of the subject shot belongs to the preset intensity range; if the motion feature parameter comprises the motion frequency, and the motion frequency falls into a preset frequency range, the motion intensity of the subject shot belongs to the preset intensity range.

In a particular embodiment, a boundary value of the preset speed range is in positive correlation to a shooting distance of the subject shot.

It shall be noted that the structures of the parameter obtaining sub-unit 1403A, the intensity determining sub-unit 1403B and the first playing sub-unit 1403C shown in the embodiment of Fig. 17 may be contained in the embodiments of Fig. 15 to Fig. 16, which the present disclosure will not limit.

As shown in Fig. 18 that is a block diagram of another device for controlling playing according to an illustrative embodiment, this embodiment is based on the embodiment shown in Fig. 17. The first playing sub-unit 1403C may comprise: a fast playing module 1801 and a slow playing module 1802, in which the fast playing module 1801 is configured to play the video file at a first accelerated playing speed, if a value of the motion feature parameter is smaller than a lower boundary value of the preset intensity range; the slow playing module 1802 is configured to play the video file at a second decelerated playing speed, if the value of the motion feature parameter is greater than an upper boundary value of the preset intensity range; wherein the first accelerated playing speed is faster than the second decelerated playing speed.

As shown in Fig. 19 that is a block diagram of another device for controlling playing according to an illustrative embodiment, this embodiment is based on the embodiment shown in Fig. 14. The playing unit 1403 may comprise a scene identifying sub-unit 1403D, a scene determining sub-unit 1403E and a second playing sub-unit 1403F, in which the scene identifying sub-unit 1403D is configured to identify a shooting scene of the video file according to a type of the subject shot or a type of an action executed by the subject shot; the scene determining sub-unit 1403E is configured to determine whether the shooting scene belongs to a preset variable speed replay scene; the second playing sub-unit 1403F is configured to play the video clip at a variable speed if the shooting scene belongs to the preset variable speed replay scene, otherwise to play the video clip in a normal manner (i.e. at a invariable speed).

It shall be noted that the structures of the scene identifying sub-unit 1403D, the scene determining sub-unit 1403E and the second playing sub-unit 1403F shown in the embodiment of Fig. 19 may be contained in the embodiments of Fig. 15 to Fig. 18, which the present disclosure will not limit.

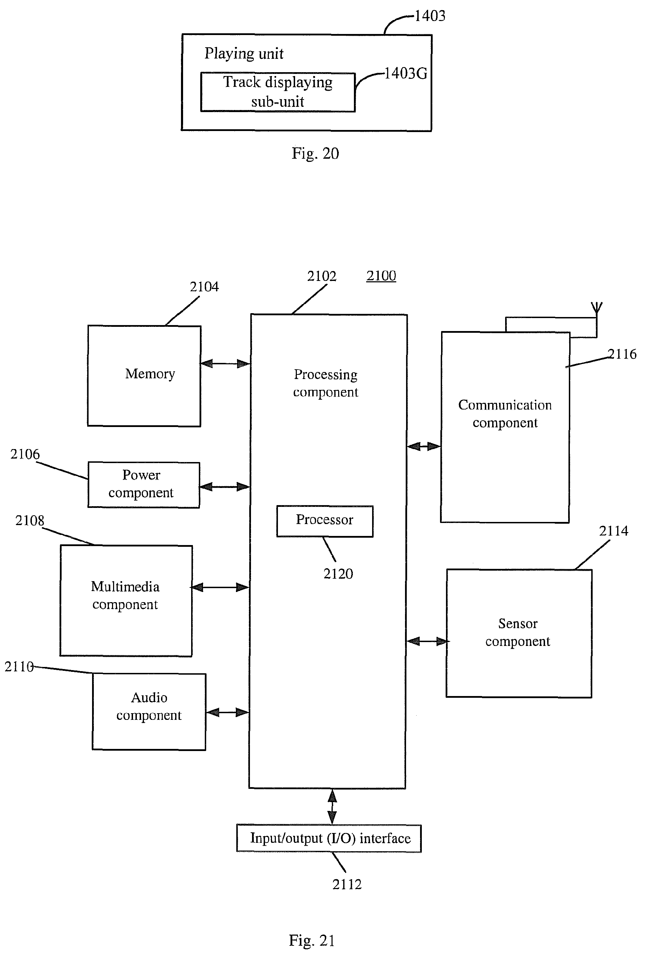

As shown in Fig. 20 that is a block diagram of another device for controlling playing according to an illustrative embodiment, this embodiment is based on the embodiment shown in Fig. 14. The playing unit 1403 may comprise: a track displaying sub-unit 1403G configured to display a motion track formed in a video footage of the video clip of the subject shot.

It shall be noted that the structure of the track displaying sub-unit 1403G shown in the embodiment of Fig. 20 may be contained in the embodiments of Fig. 15 to Fig. 19, but other embodiments may be contemplated.

With respect to the devices in the above embodiments, the specific manners for performing operations for individual modules therein have been described in detail in the embodiments regarding the methods for controlling playing, which will not be elaborated herein.

The device embodiment is substantially corresponding to the method embodiment, so relevant part of illustration of the method embodiment may be referred to. The device embodiment described above is only illustrative, in which the units described as separate components may be or may not be physically separate; the component as the displaying unit may be or not be a physical unit, i.e. may be located at a position or be distributed at many network elements. It is possible to select part of or all of the modules to realize the objective of the present disclosure, which may be understood and implemented by those skilled in the art without paying more creative effort.

Accordingly, the present disclosure further provides a device for controlling playing. The device comprises a processor and a memory configured to store an instruction executable by the processor, in which the processor is configured to obtain a video file; to determine a vision field of a user; and to select a video clip corresponding to the vision field of the user from the video file, and to play the video clip.

Accordingly, the present disclosure further provides a terminal. The terminal comprises a memory and one or more programs which are stored in the memory. One or more of the processors are configured to execute the instructions for the following operations contained in the one or more programs: obtaining a video file; determining a vision field of a user; selecting a video clip corresponding to the vision field of the user from the video file, and playing the video clip.

Fig. 21 is a block diagram of a device 2100 for controlling playing according to an illustrative embodiment. For example, the device 2100 may be a mobile phone, a computer, a digital broadcast terminal, a messaging device, a gaming console, a tablet, a medical device, exercise equipment, a personal digital assistant, a wearable device (like smart glasses) and the like.

Referring to Fig. 21, the device 2100 may comprise one or more of the following components: a processing component 2102, a memory 2104, a power component 2106, a multimedia component 2108, an audio component 2110, an input/output (I/O) interface 2112, a sensor component 2114, and a communication component 2116.

The processing component 2102 typically controls overall operations of the device 2100, such as the operations associated with display, telephone calls, data communications, camera operations, and recording operations. The processing component 2102 may comprise one or more processors 2120 to execute instructions to perform all or part of the steps in the above described methods. Moreover, the processing component 2102 may comprise one or more modules which facilitate the interaction between the processing component 2102 and other components. For instance, the processing component 2102 may comprise a multimedia module to facilitate the interaction between the multimedia component 2108 and the processing component 2102.

The memory 2104 is configured to store various types of data to support the operation of the device 2100. Examples of such data comprise instructions for any applications or methods operated on the device 2100, contact data, phonebook data, messages, pictures, video, etc. The memory 2104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2106 provides power to various components of the device 2100. The power component 2106 may comprise a power management system, one or more power sources, and any other components associated with the generation, management, and distribution of power in the device 2100.

The multimedia component 2108 comprises a screen providing an output interface between the device 2100 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2108 comprises a front camera and/or a rear camera. The front camera and the rear camera may receive an external multimedia datum while the device 2100 is in an operation mode, such as a photographing mode or a video mode. Each of the front camera and the rear camera may be a fixed optical lens system or have focus and optical zoom capability.

The audio component 2110 is configured to output and/or input audio signals. For example, the audio component 2110 comprises a microphone ("MIC") configured to receive an external audio signal when the device 2100 is in an operation mode, such as a call mode, a recording mode, and a voice recognition mode. The received audio signal may be further stored in the memory 2104 or transmitted via the communication component 2116. In some embodiments, the audio component 2110 further comprises a speaker to output audio signals.

The I/O interface 2112 provides an interface between the processing component 2102 and peripheral interface modules, such as a keyboard, a click wheel, buttons, and the like. The buttons may comprise, but are not limited to, a home button, a volume button, a starting button, and a locking button.

The sensor component 2114 comprises one or more sensors to provide status assessments of various aspects of the device 2100. For instance, the sensor component 2114 may detect an open/closed status of the device 2100, relative positioning of components, e.g., the display and the keypad, of the device 2100, a change in position of the device 2100 or a component of the device 2100, a presence or absence of user contact with the device 2100, an orientation or an acceleration/deceleration of the device 2100, and a change in temperature of the device 2100. The sensor component 2114 may comprise a proximity sensor configured to detect the presence of nearby objects without any physical contact. The sensor component 2114 may also comprise a light sensor, such as a CMOS or CCD image sensor, for use in imaging applications. In some embodiments, the sensor component 2114 may also comprise an accelerometer sensor, a gyroscope sensor, a magnetic sensor, a pressure sensor, or a temperature sensor.

The communication component 2116 is configured to facilitate communication, wired or wirelessly, between the device 2100 and other devices. The device 2100 can access a wireless network based on a communication standard, such as WiFi, 2G, or 3G, or a combination thereof. In one illustrative embodiment, the communication component 2116 receives a broadcast signal or broadcast associated information from an external broadcast management system via a broadcast channel. In one illustrative embodiment, the communication component 2116 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 2100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer-readable storage medium comprising instructions, such as comprised in the memory 2104, executable by the processor 2120 in the device 2100, for performing the above-described methods. For example, the non-transitory computer-readable storage medium may be a ROM, a RAM, a CD-ROM, a magnetic tape, a floppy disc, an optical data storage device, and the like.

Other embodiments of the present invention will be apparent to those skilled in the art from consideration of the specification and practice of the invention disclosed here. This application is intended to cover any variations, uses, or adaptations of the invention following the general principles thereof and comprising such departures from the present invention as come within known or customary practice in the art.

## Claims

1. A method for controlling playing, comprising:
obtaining (102) a video file;
determining (104) a vision field of a user;
selecting (106) a video clip corresponding to the vision field of the user from the video file, and playing the video clip.

2. The method according to claim 1, wherein obtaining the video file comprises:
invoking a camera of a device to shoot a subject; or
receiving the video file obtained by shooting the subject by a camera of another device.

3. The method according to claim 1 or 2, wherein determining a vision field of a user comprises:
determining the vision field of the user according to an head orientation and an eyeball motion state of the user captured.

4. The method according to any one of claims 1 to 3, wherein playing the video clip comprises:
obtaining a motion feature parameter of the subject shot;
determining whether a motion intensity of the subject shot belongs to a preset intensity range, according to the motion feature parameter;
if no, playing the video clip at a variable speed, otherwise playing the video clip at an invariable speed distinct from the variable speed.

5. The method according to claim 4, wherein the motion feature parameter comprises at least one of motion speed and motion frequency;
wherein if the motion feature parameter comprises the motion speed, and the motion speed falls into a preset speed range, the motion intensity of the subject shot belongs to the preset intensity range; if the motion feature parameter comprises the motion frequency, and the motion frequency falls into a preset frequency range, the motion intensity of the subject shot belongs to the preset intensity range.

6. The method according to claim 5, wherein a boundary value of the preset speed range is in positive correlation to a shooting distance of the subject shot.

7. The method according to any one of claims 4 to 6, wherein playing the video clip at the variable speed comprises:
playing the video file at an accelerated speed if a value of the motion feature parameter is smaller than a lower boundary value of the preset intensity range;
playing the video file at a decelerated speed if the value of the motion feature parameter is greater than an upper boundary value of the preset intensity range.

8. The method according to any one of claims 1 to 7, wherein playing the video clip comprises:
identifying a shooting scene of the video file according to a type of the subject shot or a type of an action executed by the subject shot;
determining whether the shooting scene belongs to a preset variable speed replay scene;
if yes, playing the video clip at a variable speed, otherwise playing the video clip at an invariable speed distinct from the variable speed.

9. The method according to any one of claims 1 to 8, wherein playing the video clip comprises:
displaying a motion track formed in a video footage of the video clip of the subject shot.

10. A computer program including instructions for executing the steps of a method according to any one of claims 1 to 9 when said program is executed by a computer.

11. A device for controlling playing, comprising:
an obtaining unit (1401) configured to obtain a video file;
a determining unit (1402) configured to determine a vision field of a user;
a playing unit (1403) configured to select a video clip corresponding to the vision field of the user from the video file, and to play the video clip.

12. The device according to claim 11, wherein the playing unit comprises:
a parameter obtaining sub-unit (1403A) configured to obtain a motion feature parameter of the subject shot;
an intensity determining sub-unit (1403B) configured to determine whether a motion intensity of the subject shot belongs to a preset intensity range, according to the motion feature parameter;
a first playing sub-unit (1403C) configured to play the video clip at a variable speed if the motion intensity does not belong to the preset intensity range, otherwise to play the video clip at an invariable speed distinct form the variable speed.

13. The device according to claim 12, wherein the motion feature parameter comprises at least one of motion speed and motion frequency;
wherein if the motion feature parameter comprises the motion speed, and the motion speed falls into a preset speed range, the motion intensity of the subject shot belongs to the preset intensity range; if the motion feature parameter comprises the motion frequency, and the motion frequency falls into a preset frequency range, the motion intensity of the subject shot belongs to the preset intensity range.

14. The device according to claim 13, wherein a boundary value of the preset speed range is in positive correlation to a shooting distance of the subject shot.

15. The device according to any one of claims 12 to 14, wherein the first playing sub-unit comprises:
a fast playing module (1801) configured to play the video file at a first speed, if a value of the motion feature parameter is smaller than a lower boundary value of the preset intensity range; and
a slow playing module (1802) configured to play the video file at a second speed, if the value of the motion feature parameter is greater than an upper boundary value of the preset intensity range; wherein the first speed is faster than the second speed.
